# EUROPÄISCHE PATENTSCHRIFT

(11) **EP 2 861 482 B1**
(45) Veröffentlichungstag und Bekanntmachung des Hinweises auf die Patenterteilung: **23.03.2016**
(21) Anmeldenummer: 13730804.5
(22) Anmeldetag: 13.06.2013
(51) Int. Cl.: B62D 23/00, B62D 29/04

(54) **KAROSSERIE-TRAGSTRUKTUR FÜR EINE FAHRZEUG-KAROSSERIE**
BODY SUPPORTING STRUCTURE FOR A VEHICLE BODY
STRUCTURE PORTEUSE POUR CARROSSERIE DE VÉHICULE

(30) Priorität: 13.06.2012 DE 102012011878
(43) Veröffentlichungstag der Anmeldung: 22.04.2015
(73) Patentinhaber: Audi AG, 85045 Ingolstadt (DE)
(72) Erfinder: WERUM, Daniel, 74172 Neckarsulm (DE); LEHR, Andreas, 74211 Leingarten (DE); HAFFNER, Peter, 32683 Barntrup (DE)
(74) Vertreter: Patzelt, Heike Anna Maria
(86) Internationale Anmeldenummer: PCT/EP2013/001745
(87) Internationale Veröffentlichungsnummer: WO 2013/185917

(56) Entgegenhaltungen:
- WO-A1-2006/011057
- WO-A1-2009/077540
- WO-A2-03/057529
- US-A1- 2012 104 803

## Beschreibung

Die Erfindung betrifft eine Karosserie-Tragstruktur für eine Fahrzeug-Karosserie mit einem Fahrgastzellenabschnitt, einem Vorbauabschnitt und einem Heckteilabschnitt gemäß dem Oberbegriff des Patentanspruch 1.

Stand der Technik zur Herstellung von Fahrzeug-Karosserien ist seit langem eine selbsttragende Karosserie in Schalenbauweise, bei welcher in unterschiedlichen Fügetechniken Profile, Rahmenteile, Verstärkungen, Blechteile und Beplankungen als Stahl- und Blechelemente unlösbar miteinander verbunden werden und eine Karosserie-Tragstruktur bilden. Zu dieser Kategorie gehört auch die sogenannte Monocoque-Konstruktion, die vor allem im Motorsport Verwendung findet. Dabei bildet bspw. eine einschalige Außenhaut die tragende Struktur eines Fahrzeugs, auch Fahrerzellen werden in dieser Monocoque-Bauweise als Monocoque-Schalen hergestellt und mit der Karosserie verbunden.

Ein neues Konstruktionskonzept im Karosseriebau wurde durch die Anmelderin mit dem sogenannten Audi-Space-Frame (ASF) als Leichtbau-Konzept eingeführt. Dabei wird eine selbsttragende Karosserie aus Alu-Guss, Alu-Profilen und Alu-Blech gebildet, in die Flächenelemente mittragend integriert werden.

Zur Optimierung des Crash-Verhaltens werden bei diesen Konzepten Längsträgerstrukturen, die über Querträgerstrukturen zu deren Versteifung und Abstützung bspw. über Gussknoten (vgl. ASF-Konzept) verbunden werden, als Hauptlastpfade hinsichtlich auftretender Lastfälle optimiert. Auch werden einzelne Lastpfadstrukturen zur Aufnahme einzelner Lasten, wie Crash-Lasten, Fahrwerksaufnahmelasten oder steifigkeitserhöhende Lasten ausgebildet. Durch Faltenbildung des verwendeten metallischen Materials in diesen Lastpfaden wird Crash-Energie abgebaut.

Im Rahmen von Leichtbau-Konzepten werden Karosserieteile zunehmend als Hybrid-Bauteile aus einer Kombination von Metall und faserverstärktem Kunststoff (FVK) oder als Kunststoff-Bauteil aus FVK-Material hergestellt.

Aus der US 2012/104803 A1 ist eine gattungsbildende Karosserie-Tragstruktur für eine Fahrzeug-Karosserie bekannt, welche aus faserverstärktem Kunststoff (FVK) hergestellt ist. Diese Karosserie-Tragstruktur umfasst ein Frontend-Modul, ein Heck-Modul und einen Fahrgastzellenabschnitt. Das Frontend-Modul umfasst eine Frontend-Struktur, ein vorderes Fahrwerk, einen Elektromotor sowie äußere Beplankungen. Diese Frontend-Struktur wird über eine Schraubverbindung mit dem Fahrgastzellenabschnitt verbunden. Das Heck-Modul umfasst eine Heckstruktur, ein hinteres Fahrwerk sowie äußere Beplankungen. Auch dieses Heck-Modul wird über eine Schraubverbindung mit dem Fahrgastzellenabschnitt verbunden.

Der Fahrgastzellenabschnitt dieser bekannten Karosserie-Tragstruktur umfasst eine Monocoque-Konstruktion, die aus mehreren Verbundelementen mittels Klebeverbindungen gefügt werden. So ist für diese Monocoque-Konstruktion eine wannenförmige Bodenwanne vorgesehen, die aus einem Wannenboden mit denselben randseitig umlaufenden Seitenteilen besteht, also aus einer vorderen Wand, zwei Seitenwänden und einer hinteren Wand, wobei der Wannenboden als separates und einstückiges Bauteil hergestellt ist.

Weiterhin ist aus der WO 2006/011057 A1 eine Karosserie-Tragstruktur bekannt, die aus einem aus mehreren Metallkomponenten zusammengeschweißten Fahrgastzellenabschnitt, einem aus Faserverbundmaterial hergestellt Frontend-Modul, welches mit dem Fahrgastzellenabschnitt verschraubt wird, und aus einem aus Faserverbundmaterial hergestellten ebenen Unterboden, der ebenso mit dem Fahrgastzellenabschnitt verschraubt wird und einen mittig in Längsrichtung des Fahrzeugs verlaufenden Tunnel aufweist.

Weiterhin beschreibt auch die WO 03/057529 A2 eine Karosserie-Tragstruktur für ein Hybrid-Fahrzeug. Diese Karosserie-Tragstruktur umfasst eine aus Faserverbundmaterial bestehende Sicherheitszelle als Fahrgastzellenabschnitt, einen sich daran anschließenden Hilfsrahmen aus Aluminium mit einer Crash-Struktur sowie eine mit diesem Hilfsrahmen verbundenen Frontcrash-Struktur als Vorbauabschnitt, die ebenso aus einem Faserverbundmaterial hergestellt ist. Der Fahrgastzellenabschnitt ist auf einem wannenförmigen Unterboden aufgebaut, der als Wannenboden mit dessen gesamte horizontale Kontur umlaufenden und nach oben sich erstreckenden Seitenteilen ausgebildet ist. Die in Fahrzeuglängsrichtung verlaufenden Seitenteile des Unterbodens bilden die Seitenschweller des Fahrzeugs.

Auch aus der WO 2009/077540 A1 ist eine Karosserie-Tragstruktur für ein Fahrzeug bekannt, die einen zentralen Abschnitt als Unterboden, einen Frontabschnitt zur Aufnahme der Vorderräder und einen Heckabschnitt zur Aufnahme der Hinterräder umfasst. Dieser zentrale Abschnitt besteht im Wesentlichen aus einer geschlossenen äußeren Struktur, die durch eine äußere senkrechte Wand gebildet wird, so dass von dem derart gebildeten Unterboden eine Sicherheitszelle zur Aufnahme von schweren Komponenten entsteht.

Aus der EP 1 781 527 B1 ist eine Karosserie-Tragstruktur bekannt, welche modulartig aus einem den Fahrgastraum aufweisenden Mittelkarosserieteil und einem vorderen Karosserieteil aufgebaut ist. Das Mittelkarosserieteil ist als Tragrahmen aus Aluminium-Profilen hergestellt und mit einer Bodenplatte verbunden. Sowohl diese Bodenplatte als auch das vordere Karosserieteil ist aus Faserverbundmaterial, wie Kohlenstoff-, Kevlar-, und/oder Glasfasern hergestellt. Gemäß dieser EP 1 781 527 B1 wird auch vorgeschlagen, die Mittelkarosserie teilweise oder vollständig ebenso aus Faserverbundmaterial herzustellen.

Die DE 10 2010 014 574 A1 beschreibt eine Fahrzeugkarosserie, die ebenso modulartig aus einer selbsttragenden Fahrgastzelle und einem daran befestigten Vor- und Hinterbau besteht, wobei die Fahrgastzelle ein aus faserverstärktem Kunststoff hergestelltes wannenförmiges Bodenteil mit einer Vorder- und Rückwand aufweist. An dieser Vorder- und Rückwand werden der Vorbau und der Hinterbau angeschraubt.

Obwohl Energieabsorptionselemente aus einem Faserverbundwerkstoff gegenüber metallischen Längs- oder Querträgern ein höheres spezifisches Energieabsorbtionsvermögen aufweisen, ist bei solchen Strukturen aus faserverstärktem Kunststoff das Crash-Verhalten nachteilig, da diese Strukturen Crashenergie durch deren vollständige Zerstörung in einem progressiven Stauchprozess (Crushing) aufnehmen und dadurch die Restfestigkeit nicht ausreichend ist, die dort angebundenen Strukturelemente zusammenzuhalten.

Nun ist es auch bekannt, für Leichtbaustrukturen die Natur als Vorbild zu nehmen und als bionisches Design nachzubilden, welches als Ziel die maximale Gewichtseinsparung bei optimaler Stabilität verfolgt.

Ein solches Konzept wurde von der Daimler AG im Rahmen der Entwicklung eines Konzeptfahrzeuges, "Bionic Car" genannt, verfolgt. Dieses Fahrzeug wurde mit einer optimierten Rohbaustruktur innerhalb einer optimalen aerodynamischen Hülle, für die ein Kofferfisch als Strömungsvorbild benutzt wurde, aufgebaut. Diese optimierte Rohbaustruktur wurde mittels einer den Mineralisationsvorgang von Knochen simulierenden Software entwickelt, die lastgerechte Strukturvorschläge für technische Bauteile liefert. Eine Überführung dieses Konzeptfahrzeugs Bionic Car in eine Serienfertigung erfolgte bisher nicht.

Ferner ist es auch bekannt, Karosserieteile in bionisch optimaler Bauform zu entwickeln, wie dies bspw. aus der DE 10 2009 052 920 A1 hinsichtlich eines an einer Fahrzeugkarosserie zu befestigenden Hilfsträgers beschrieben wird.

Aufgabe der Erfindung ist es, eine Karosserie-Tragstruktur für eine Fahrzeug-Karosserie zu schaffen, welche zumindest teilweise eine bionische Stukturoptimierung aufweist, insbesondere ein optimales Crash-Verhalten aufweist.

Diese Aufgabe wird gelöst durch eine Karosserie-Tragstruktur für eine Fahrzeug-Karosserie mit den Merkmalen des Patentanspruchs 1.

Eine solche Karosserie-Tragstruktur für eine Fahrzeug-Karosserie mit einem Fahrgastzellenabschnitt, einem Vorbauabschnitt und einem Heckteilabschnitt, bei der
- zur Bildung der Karosserie-Tragstruktur wenigstens ein Tragstruktur-Körper als in alle Fahrzeugrichtungen sich erstreckende drei-dimensionale Flächenstruktur aus Flächenelementen ausgebildet ist,
- die in unterschiedlichen Fahrzeugrichtungen sich erstreckenden Flächenelemente unter Bildung von weichen Übergängen verbunden ist,
- die Flächenelemente mit in Abhängigkeit der auftretenden Lasteinträge strukturierten Querschnittsflächen ausgebildet sind, und
- Flächenelemente mit geringen Lasteinträgen oder nichttragenden Bereiche mit Durchbrüchen ausgebildet sind,
   zeichnet sich erfindungsgemäß dadurch aus, dass
- als Tragstruktur-Körper eine Bodengruppe mit einem gemeinsamen wannenförmigen Unterboden für den Fahrgastzellenabschnitt und den Vorbauabschnitt mit einem Wannenboden und mit demselben einstückig verbundenen Wannenseitenteilen vorgesehen ist, wobei im Bereich des Vorbauabschnittes der Wannenboden gegenüber dem Bereich des Fahrgastzellenabschnittes mit geringerer Breite in Fahrzeugquerrichtung (y-Richtung) symmetrisch abgesetzt ist, und
- die Bodengruppe mit die gesamte horizontale Kontur des Wannenbodens umlaufenden, im Wesentlichen in Fahrzeughoch-richtung (z-Richtung) sich erstreckenden Wannenseitenteilen ausgebildet ist.

Ein solcher erfindungsgemäßer Tragstruktur-Körper stellt quasi ein in allen drei Raumrichtungen sich erstreckendes Flächentragwerk dar, welches sich in sich selbst abstützt und dadurch Lasteinträge in alle Raumrichtungen verteilt, wobei in Abhängigkeit der auftretenden Lasteinträge die Querschnittsflächen derart strukturiert sind, so dass hohe Lasteinträge zu großen Flächenquerschnitten führen.

Mit einem solchen Flächentragwerk werden die üblichen die Längs- und Querträger verbindenden Knoten aufgelöst und die Längs- und Querstrukturen übergangslos über weiche Übergänge, vereint, also ohne dass dabei scharfe Kanten ausgebildet werden. Somit gibt es keine scharfen Kanten in den Lastpfaden, wodurch Spannungsspitzen vermeiden werden. Ebenso entfallen nachteilige Trenn- oder Fügestellen. Weiterhin bilden sich mit einem solchen Flächentragwerk homogene Lastpfade aus, wodurch Spannungsspitzen bei einem Krafteintrag nicht auftreten können. Einzelne nur in eine Raumrichtung wirkende Träger sind damit nicht mehr erforderlich.

Insgesamt wird mit einem solchen erfindungsgemäßen Tragstruktur-Körper eine Struktur mit einer hohen Stabilität bei minimierten Materialeinsatz geschaffen.

Eine solche Bodengruppe weist weder Längsträger noch Querträger auf, Kräfte eines frontseitigen Lasteintrages werden homogen in die Fläche der Bodengruppe, also insbesondere in den Wannenboden eingeleitet und dort verteilt. In gleicher Weise werden auch die bei einem Seitencrash einwirkenden Kräfte homogen in dieser Bodengruppe verteilt.

In vorteilhafter Weise sind die in Fahrzeuglängsrichtung verlaufenden Wannenseitenteile des Fahrgastzellenabschnittes in Fahrzeughochrichtung in einer Schwellerhöhe des Fahrzeugs ausgebildet. Damit werden gleichzeitig die Türöffnungen definiert, ohne dass weitere Teile erforderlich sind.

Weiterbildungsgemäß sind dagegen die Wannenseitenteile der Bodengruppe im Bereich des Vorbauabschnittes in Fahrzeughochrichtung gegenüber der Schwellerhöhe höher ausgebildet. Damit wird eine hohe Stabilität des Vorbaus erzielt und insbesondere können dort über angebundene weitere Tragstruktur-Körper Kräfte eingeleitet werden, die sich dann ebenso in der Bodengruppe verteilen. Somit können dort in diesen in Fahrzeuglängsrichtung verlaufenden Wannenseitenteilen im Bereich des Vorbauabschnittes Öffnungen für Vorderachsen aufgenommen werden.

Gemäß einer weiteren Ausgestaltung der Erfindung weist das frontseitige Wannenseitenteil in Fahrzeugquerrichtung wenigstens einen Durchbruch zur Kühlluftzufuhr auf. So kann dort bauraumsparend der Kühlergrill mit Kühlaggregaten angeordnet werden.

In einer Ausgestaltung der Erfindung ist der Unterboden im Bereich des Übergangs des Fahrgastzellenabschnittes zum Vorbauabschnitt mit einem die Wannenseitenteile verbindenden Erhebung mit einer Querschnittsfläche in Fahrzeugquerrichtung ausgebildet, welche größer ist als die Querschnittsfläche des Wannenbodens im Bereich des Fahrgastzellenabschnittes.

Damit wird eine hohe Stabilität in Fahrzeugquerrichtung im vorderen Bereich des Fahrgastzellenabschnittes der Fahrzeugkarosserie erreicht, so dass über diese Erhebung große Lastkräfte homogen in den Unterboden eingeleitet werden.

Besonders vorteilhaft ist es, wenn der Wannenboden im Bereich des Vorbauabschnittes gegenüber dem Wannenboden im Bereich des Fahrgastzellenabschnittes mit einem stumpfen Winkel von mindestens 135° ausgebildet ist. Damit wird vorteilhaft der c_{w}-Wert positiv beeinflusst.

In einer weiteren Ausgestaltung der Erfindung weist der Vorbauabschnitt als Tragstruktur-Körper eine Vorbauzelle mit zwei jeweils in Fahrzeughochrichtung gerichteten Vorbauseitenteilen auf, die jeweils in Fahrzeuglängsrichtung, ausgehend vom endseitigen Bereich des Fahrgastzellenabschnittes der Kontur der Wannenseitenteile bis zum in Fahrzeugquerrichtung verlaufenden frontseitigen Wannenseitenteil verlaufend ausgebildet sind, ferner die Vorbauseitenteile jeweils am frontseitigen Ende des Fahrgastzellenabschnittes mit einem unteren A-Säulenabschnitt ausgebildet sind, und im Übergang des Fahrgastzellenabschnittes zum Vorbauabschnitt ein die Vorbauseitenteile verbindendes Flächenelement als Stirnwand vorgesehen ist.

Damit wird zusammen mit dem Unterboden ein stabiler und gewichtsoptimierter Vorbau erreicht. Eine flächen- und formschlüssige Verbindung zwischen den Vorbauseitenteilen und den Wannenseitenteilen des Unterbodens wird über eine stirnseitige Verbindung erreicht.

In vorteilhafter Weise sind bei dieser Vorbauzelle die beiden Vorbauseitenteile jeweils an ihrem oberseitigen Ende mit einem in Fahrzeuglängsrichtung und in Fahrzeugquerrichtung verlaufenden Vorbauflächenelement übergehend ausgebildet, derart, dass zur Bildung eines Radkastens dessen außenseitiger Begrenzungsrand mit dem Verlauf des Wannenseitenteils im Bereich des Fahrgastzellenabschnittes fluchtet. Vorzugsweise sind dabei die beiden Vorbauflächenelemente im Bereich des die Stirnwand des Fahrgastzellenabschnittes bildenden Flächenelementes ineinander übergehend ausgebildet.

Eine solche Vorbauzelle kann alle erforderlichen Antrieb- und Fahrwerkskomponenten aufnehmen, ohne dass weitere Karosserieteile erforderlich sind.

Weiterbildungsgemäß kann die Vorbauzelle an ihrem frontseitigen Ende beidseitig jeweils mit einer frontseitig offenen Aufnahmekammer ausgebildet werden, wobei die Vorbauseitenteile und die Vorbauflächenelemente jeweils eine Seitenwand der Aufnahmekammer bilden. Damit können alle erforderlichen Front-Beleuchtungskomponenten von dieser Aufnahmekammer der Vorbauzelle aufgenommen werden.

In einer weiteren Ausgestaltung der Erfindung ist vorgesehen, dass zum Lagern einer Rücksitzbank an das in Fahrzeugquerrichtung verlaufende, rückwärtige Wannenseitenteil des Fahrgastzellenabschnittes ein im Wesentlichen in waagerechter Richtung verlaufendes Sitzflächenelement angeformt ist, welches mit einem im Wesentlichen in Fahrzeughochrichtung sich erstreckenden Sitzlehnenflächenelement verbunden ist. Vorzugsweise weisen dabei das Sitzflächenelement und das Sitzlehnenflächenelement zueinander eine Winkelstellung mit einem im Wesentlichen dem Winkel zwischen dem Sitzteil und der Rückenlehne der Rücksitzbank entsprechenden Winkel auf.

Eine besonders stabile und crashsichere Bodengruppe wird weiterbildungsgemäß dadurch geschaffen, dass der Unterboden ausgehend von dem rückwärtigen Wannenseitenteil in rückwärtiger Richtung mittels außenseitig angeordneten Seitentunneln verlängert wird, derart dass die außenseitigen Tunnelwände der Seitentunnel mit dem jeweiligen Wannenseitenteil im Bereich des Fahrgastzellenabschnittes fluchtet. Vorzugsweise ist der Seitentunnel mit einer im Wesentlichen mit dem Wannenboden fluchtenden unterseitigen Tunnelwand ausgebildet, während die oberseitige Tunnelwand im Wesentlichen mit dem ersten Flächenteil des rückwärtigen Wannenseitenteils des Unterbodens fluchtenden ausgebildet ist.

Ferner sind gemäß einer Weiterbildung der Erfindung die beiden Seitentunnel stirnseitig in der Ebene des rückwärtigen Wannenseitenteils endend ausgebildet. Vorzugsweise sind dabei die beiden in Fahrzeughochrichtung fluchtenden innenseitigen Tunnelseitenwände des Seitentunnels das rückwärtige Wannenseitenteil gitterartig strukturierend ausgebildet. Durch diese Anbindung der Seitentunnel an das rückwärtige Wannenseitenteil wird die Steifigkeit in diesem Bereich verbessert, wobei gleichzeitig mit der gitterartigen Struktur dieses Wannenseitenteils weniger Material erforderlich ist.

In einer bevorzugten Weiterbildung der Erfindung umfasst der Heckteilabschnitt ein Unterboden-Heckteil als Tragstruktur-Körper, welches ein den Wannenboden im Bereich des Fahrgastzellenbodens rückwärtig fortführenden Bodenteil und Seitenteile aufweist, welche an die äußere Form der Seitentunnel in Fahrzeugquerrichtung stufenartig angepasst sind. Hierdurch ergibt sich die Möglichkeit, Hinterachsaggregate an dieses Unterboden-Heckteil anzubinden. Vorzugsweise sind die Seitenteile des Unterboden-Heckteils jeweils in ein eine Radkasteninnenwand bildendes Flächenelement übergehend ausgebildet.

Weiterhin ist es gemäß einer vorteilhaften Ausgestaltung der Erfindung vorgesehen, dass der Heckteilabschnitt als weiterer Tragstruktur-Köper eine Stauraumzelle umfasst, welche einen Stauraumzellenboden mit daran angeformten Stauraumseitenwänden und angeformter frontseitigen Stirnwand aufweist. Dabei ist diese Stirnwand derart ausgebildet, dass diese mit dem Sitzlehnenflächenelement fluchtet.

Damit umfasst der Heckteilabschnitt zur Bildung der Karosserie-Tragstruktur nur wenige Tragstruktur-Körper.

Zur Bildung einer Dachstruktur ist nach einer Ausgestaltung der Erfindung jeweils ein den unteren A-Säulenabschnitt bogenförmig mit der Stirnwand der Stauraumzelle verbindender Dachspant vorgesehen, wobei jeweils ein B-Säulenelement den Dachspant mit dem Wannenseitenteil des Wannenbodens verbindet. Vorzugsweise sind zwei beabstandete die Dachspanten in Fahrzeugquerrichtung verbindende Querelemente vorgesehen, welche zwischen sich ein Dachflächenelement aufnehmen.

Zur Vervollständigung der Karosserie-Tragstruktur ist als Tragstruktur-Körper ein den unteren A-Säulenabschnitt, den Dachspant, den B-Säulenabschnitt und eine Stauraumzellenseitenwand der Stauraumzelle außenseitig abdeckendes Seitenteilelement vorgesehen.

Die erfindungsgemäßen Tragstruktur-Körper können als Faserkunststoffverbunde jeweils vollständig aus faserverstärktem Kunststoff hergestellt werden. Geeignete Verfahren sind bspw.:
- RTM (Resin Transfer Moulding) als Hochdruck-RTM oder Niederdruck-RTM,
- RIM (Resin Injection Moulding),
- Prepreg Autoclave oder Prepreg Out-of-Autoclave,
- Nasspressen,
- SMC (Sheet-Moulding-Compound) oder BMC (Bulk-Moulding-Compound).

Ferner ist es möglich für die erfindungsgemäßen Tragstruktur-Körper Strukturschäume einzusetzen, die entweder in Hohlräume der Tragstruktur-Körper oder als fertige Bauteile in die Tragstruktur-Körper eingebracht werden.

Eine Verbindung der Tragstruktur-Körper erfolgt mittels Klebeverbindungen.

Vorzugsweise ist es auch möglich, diese erfindungsgemäßen Tragstruktur-Körper aus Aluminium- oder Stahlblech durch geeignete Umformverfahren herzustellen und ebenso wie bei der Herstellung der Tragstruktur-Körper Strukturschäume zu verwenden.

Die erfindungsgemäße Karosserie-Tragstruktur eignet sich besonders für Fahrzeug-Karosserien von Elektrofahrzeugen, bei denen auf eine großräumige Brennkraftmaschine verzichtet werden kann.

Die Erfindung wird nachfolgend anhand eines Ausführungsbeispiels unter Bezugnahme auf die beigefügten Figuren ausführlich beschrieben. Es zeigen:
- Figur 1: eine frontseitige perspektivische Darstellung einer Karosserie-Tragstruktur gemäß der Erfindung,
- Figur 2: eine rückseitige perspektivische Darstellung der Karosserie-Tragstruktur gemäß Figur 1,
- Figur 3: eine perspektivische Darstellung einer Unterbodengruppe der Karosserie-Tragstruktur nach Figur 1 mit einer Vorbauzelle und einer Laderaumzelle,
- Figur 4: eine perspektivische Schnittdarstellung der Karosserie-Tragstruktur gemäß Schnitt A-A nach Figur 1,
- Figur 5: eine perspektivische Schnittdarstellung der Karosserie-Tragstruktur gemäß Schnitt B-B nach Figur 1,
- Figur 6: eine perspektivische Schnittdarstellung der Karosserie-Tragstruktur gemäß Schnitt C-C nach Figur 2, und
- Figur 7: eine perspektivische Schnittdarstellung der Karosserie-Tragstruktur gemäß Schnitt D-D nach Figur 1.

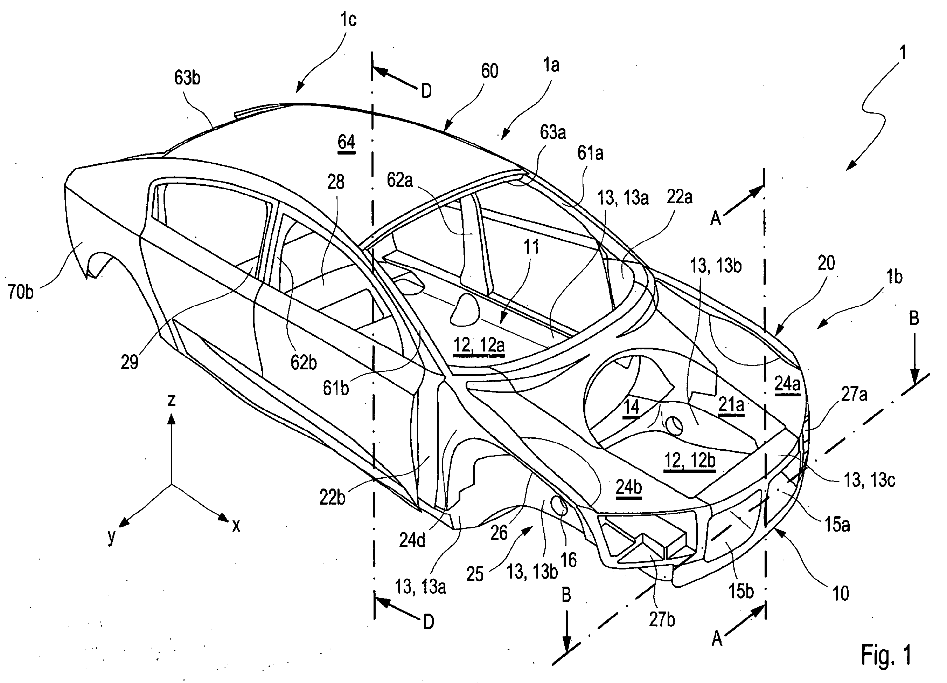

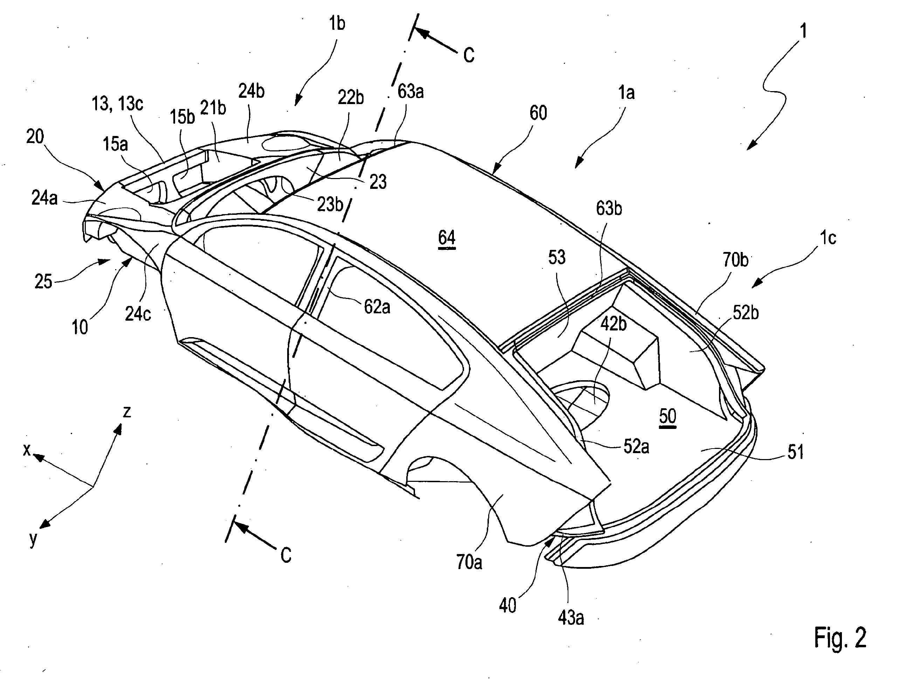

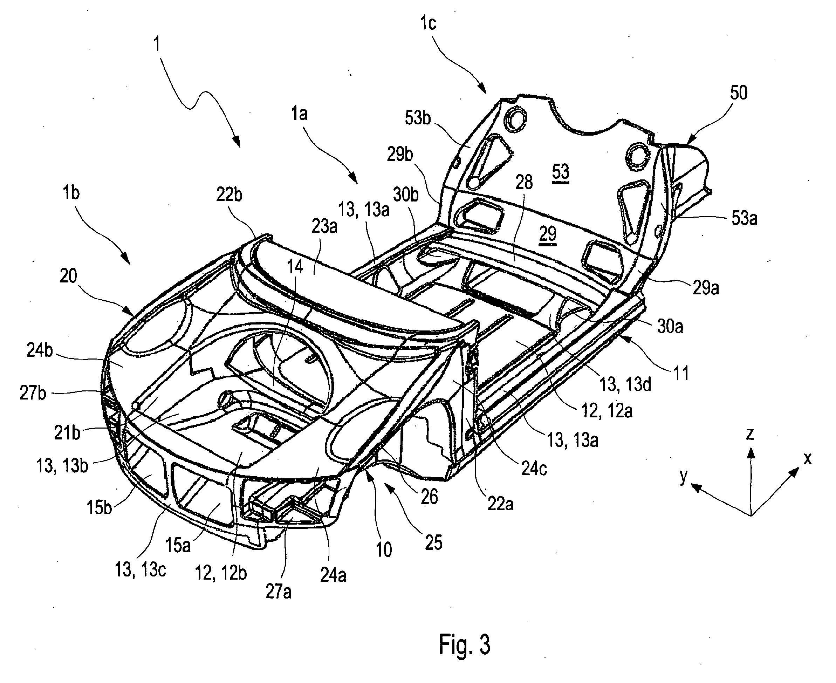

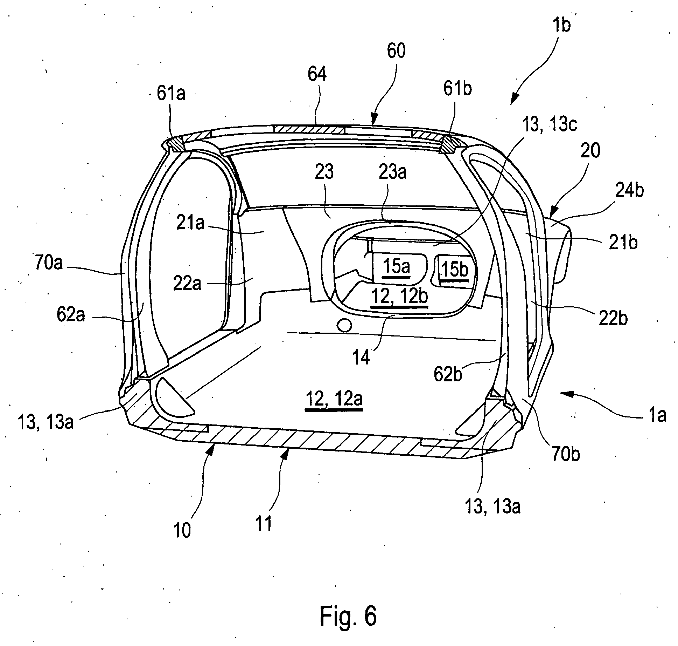

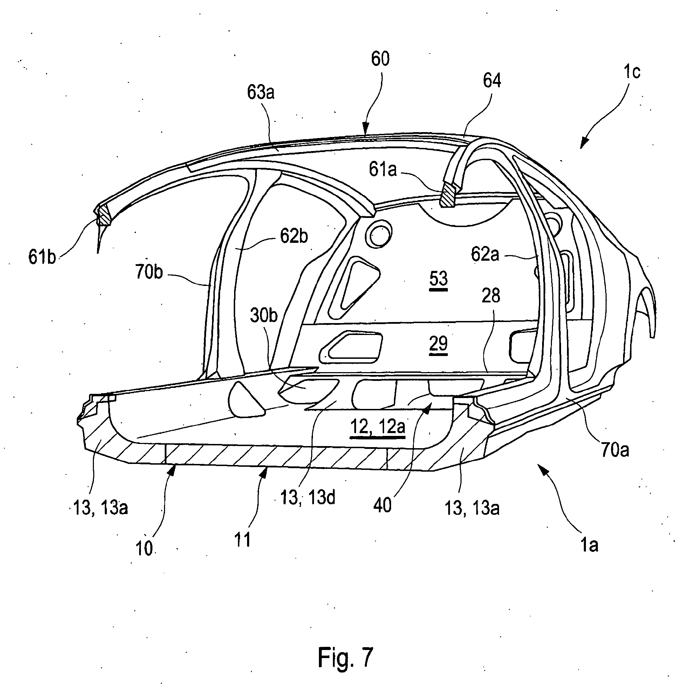

Die in den Figuren 1 und 2 dargestellte Karosserie-Tragstruktur 1 einer Fahrzeug-Karosserie besteht aus einem Fahrgastzellenabschnitt 1a, einem Vorbauabschnitt 1 b und einem Heckteilabschnitt 1 c und wird mittels mehreren Tragstruktur-Körpern aufgebaut. Ferner sind bei dieser Karosserie-Tragstruktur 1 nach Figur 1 und 2 bereits auch Fahrzeugtüren montiert, die in den nachfolgenden Figuren 3 bis 7 nicht mehr dargestellt sind.

Die Karosserie-Tragstruktur 1 umfasst als Tragstruktur-Körper eine Bodengruppe 10, eine Vorbauzelle 20, ein Unterboden-Heckteil 40, eine Stauraumzelle 50 sowie Seitenteilelemente 70a und 70b.

Diese Tragstruktur-Körper stellen ein in allen Raumrichtungen, also in alle drei Fahrzeugrichtungen x-, y- und z-Richtung sich erstreckendes Flächentragwerk aus Flächenelementen dar, welches sich in sich selbst abstützt und dadurch Lasteinträge in alle Raumrichtungen verteilt werden. Mit solchen Tragstruktur-Körpern werden die üblichen die Längs- und Querträger verbindende Knoten aufgelöst und die Längs- und Querstrukturen übergangslos über weiche, nicht scharfkantige Übergänge vereint. Somit gibt es weder scharfe Kanten in den Lastpfaden noch nachteilige Trenn- oder Fügestellen. Bei einem solchen Tragstruktur-Körper bilden sich homogene Lastpfade aus, d. h. punktuelle Lasteinträge verteilen sich sofort auf die Flächenelemente und werden in der Raumstruktur des Tragstruktur-Körpers verteilt.

Solche Tragstruktur-Körper 10, 20, 40, 50 sowie 70a und 70b werden vollständig aus einem Faserverbundwerkstoff hergestellt.

Im Folgenden werden diese Tragstruktur-Körper 10, 20, 40, 50 sowie 70a und 70b und weitere die Karosserie-Tragstruktur 1 vervollständigenden Elemente beschrieben.

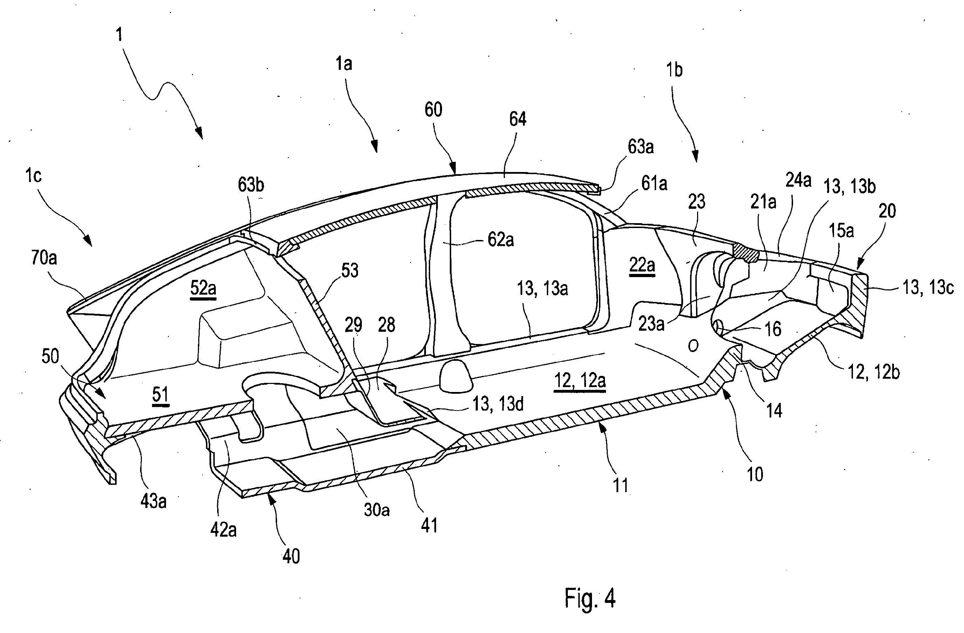

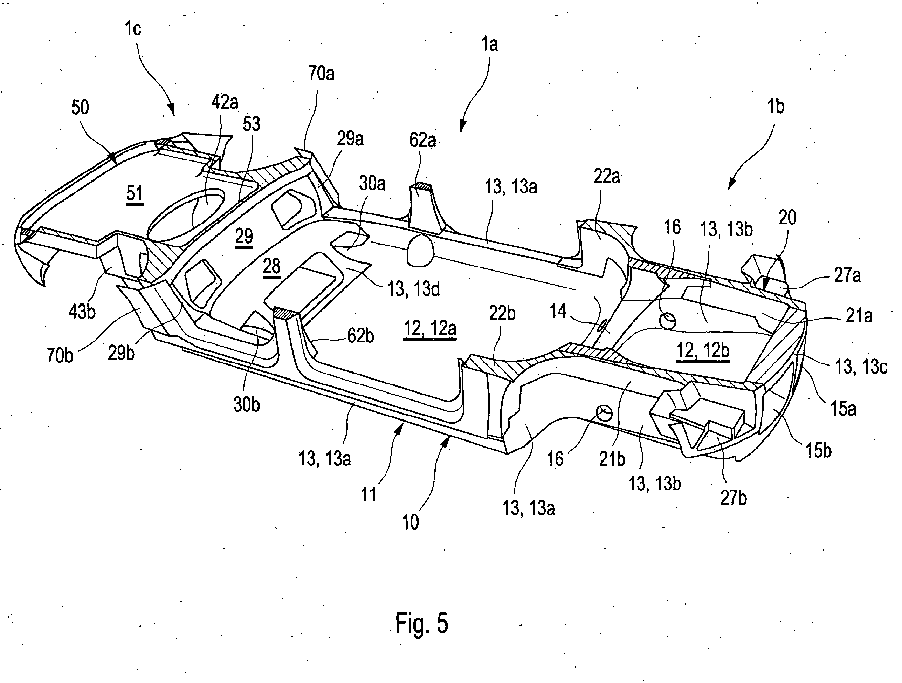

Die Bodengruppe 10 umfasst als wesentliches Teil einen Unterboden 11, welcher sich sowohl über den Fahrgastzellenabschnitt 1 a als auch über den Vorbauabschnitt 1 b erstreckt und als Tragstruktur-Körper 10 insbesondere in den Schnittdarstellungen nach Figur 4 und 5 dargestellt ist, und ein Unterboden-Heckteil 40, welches den Unterboden 11 in rückwärtiger Richtung der Karosserie-Tragstruktur 1 gemäß Figur 4 fortsetzt.

Dieser Unterboden 11 besteht aus einem Wannenboden 12 mit umlaufenden Wannenseitenteilen 13, die sich im Wesentlichen in z-Richtung erstrecken. Dieser Wannenboden 13 stellt damit ein Flächenelement dar, welches sich in z-Richtung mit den Wannenseitenteilen 13 als weitere Flächenteile fortsetzt. Im Bereich des Vorbauabschnittes 1 b ist der Wannenboden 12b in y-Richtung gegenüber dem Wannenboden 12a im Bereich des Fahrgastzellenabschnittes 1a symmetrisch abgesetzt. Die Wannenseitenteile 13a im Bereich des Fahrgastzellenabschnittes 1a gehen harmonisch in diesem Übergangsbereich in die Wannenseitenteile 13b des Vorbauabschnittes 1 b über.

Die obere Stirnseite der Wannenseitenteile 13a im Bereich des Fahrgastzellenabschnittes 1a weisen eine Höhe auf, die der Schwellerhöhe der Fahrzeug-Karosserie entspricht. Im Übergangsbereich von dem Fahrgastzellenabschnitt 1a zum Vorbauabschnitt 1 b steigt diese Schwellerhöhe der Wannenseitenteile 13a auf einen wesentlich höheren Wert der Höhe der oberen Stirnseite der Wannenseitenteile 13b im Bereich des Vorbauabschnittes 1 b an. Somit können dort Öffnungen 16 zur Aufnahme von Vorderachsen vorgesehen werden.

Das frontseitige in y-Richtung verlaufende Wannenseitenteil 13c ist mittig mit einem in z-Richtung verlaufenden Steg derart strukturiert, dass zwei Durchbrüche 15a und 15b zur Kühlluftzufuhr entstehen.

Der Wannenboden 12b im Bereich des Vorbauabschnittes 1b ist gegenüber dem Wannenboden 12a im Bereich des Fahrgastzellenabschnittes 1a leicht in z-Richtung mit einem stumpfen Winkel von mindestens 135° abgewinkelt.

Am frontseitigen Ende des zum Fahrgastzellenabschnitt 1a gehörenden Wannenbodens 12a ist dieser mit einer gegenüber diesem Wannenboden 12a sich in z-Richtung erstreckenden Erhebung 14 ausgebildet, so dass sich ein den Wannenboden 12 verstärkender Bereich mit größerem Querschnitt in Fahrzeugquerrichtung als in den benachbarten Bereichen des Wannenbodens 12a und 12b ergibt. In diesem Bereich lässt sich eine Öffnung zur Durchführung einer Lenksäule anbringen.

Zum Lagern einer Rücksitzbank an das in y-Richtung verlaufende, rückwärtige Wannenseitenteil 13d des Fahrgastzellenabschnittes 1a ist ein im Wesentlichen in waagerechter Richtung (x-y-Ebene) verlaufendes Sitzflächenelement 28 angeformt, welches mit einem im Wesentlichen in z-Richtung sich erstreckenden Sitzlehnenflächenelement 29 verbunden ist. Das Sitzflächenelement 28 und das Sitzlehnenflächenelement 29 weisen zueinander eine Winkelstellung mit einem im Wesentlichen dem Winkel zwischen dem Sitzteil und der Rückenlehne der Rücksitzbank entsprechenden Winkel auf.

Der Unterboden 11 der Bodengruppe 10 verlängert sich ausgehend von dem rückwärtigen Wannenseitenteil 13d in rückwärtiger Richtung mittels außenseitig angeordneten Seitentunneln 30a und 30b, so dass die außenseitigen Tunnelwände der Seitentunnel 30a und 30b mit dem jeweiligen Wannenseitenteil 13a im Bereich des Fahrgastzellenabschnittes 1 a fluchten, die unterseitigen Tunnelwände der beiden Seitentunnel 30a und 30b mit dem Wannenboden 12a und die oberen Tunnelwände der beiden Seitentunnel 30a und 30b mit dem Sitzflächenelement 28 des rückwärtigen Wannenseitenteil 13d fluchten.

Die beiden Seitentunnel 30a und 30b enden stirnseitig in der Ebene des rückwärtigen Wannenseitenteils 13d, wobei die beiden in z-Richtung fluchtenden innenseitigen Tunnelseitenwände der Seitentunnel 30a und 30b das rückwärtige Wannenseitenteil 13d gitterartig strukturierend ausbilden, so dass drei Durchbrüche entstehen.

Als weiterer Tragstruktur-Körper ist im Bereich des Vorbauabschnittes 1b eine Vorbauzelle 20 mit zwei jeweils in z-Richtung gerichteten Vorbauseitenteilen 21 a und 21 b vorgesehen, welche in x-Richtung, ausgehend vom endseitigen Bereich des Fahrgastzellenabschnittes 1a mit den Wannenseitenteile 13a, übergehend in die Wannenseitenteile 13b im Bereich des Vorbauabschnittes 1 b bis zum in y-Richtung verlaufenden frontseitigen Wannenseitenteil 13c verlaufend ausgebildet sind. Im Übergang von dem Fahrgastzellenabschnitt 1a zur Vorbauabschnitt 1 b, also jeweils am frontseitigen Ende des Fahrgastzellenabschnittes 1a sind Vorbauseitenteilen 21a und 21b als unterer A-Säulenabschnitt 22a und 22b ausgebildet, wobei im Übergang des Fahrgastzellenabschnittes 1a zum Vorbauabschnitt 1 b ein die Vorbauseitenteile 21a 21b verbindendes Flächenelement als Stirnwand 23 mit einem Durchbruch 23b vorgesehen ist. Diese Vorbauseitenteile 21 a und 21b schließen formschlüssig an die Wannenseitenteile 13a und 13b an.

Die beiden Vorbauseitenteile 21 a und 21b der Vorbauzelle 20 sind jeweils an ihrem oberseitigen Ende mit einem in x- und y-Richtung verlaufenden Vorbauflächenelement 24a bzw. 24b übergehend ausgebildet, derart, dass zur Bildung eines Radkastens 25 deren außenseitige freier Begrenzungsrand 26 mit dem Verlauf des Wannenseitenteils 13a im Bereich des Fahrgastzellenabschnittes 1 a fluchtet. Den Eckbereich zwischen den Vorbauflächenelementen 24a und 24b überspannt jeweils ein Flächenelement 24c bzw. 24d, so dass durch dessen Kontur und dem Begrenzungsrand 26 ein bogenförmiger Verlauf der den Radkasten 25 bildende Teile entsteht.

Ferner sind die beiden Vorbauflächenelemente 24a und 24b im Bereich des die Stirnwand 23 bildenden Flächenelementes ineinander übergehend ausgebildet, so dass in der Ebene der beiden Vorbauflächenelemente 24a und 24b eine kreisbogenähnliche Öffnung für eine Motorhaube entsteht.

Schließlich ist die Vorbauzelle 20 an ihrem frontseitigen Ende beidseitig jeweils mit einer frontseitig offenen Aufnahmekammer 27a und 27b versehen, so dass die Vorbauseitenteile 21a und 21b und die Vorbauflächenelemente 24a und 24b jeweils eine Seitenwand dieser Aufnahmekammer 27a bzw. 27b bilden.

Die obere Stirnfläche der Stirnwand 23 weist in Frontrichtung einen bogenförmigen Verlauf auf, so dass stirnseitig die Stirnwand 23 von einem Flächenelement 23a sektorartig überbrückt wird.

Als weiterer Tragstruktur-Körper ist im Bereich des Heckteilabschnittes 1 c ein Unterboden-Heckteil 40 vorgesehen, welches einen den Wannenboden 12a im Bereich des Fahrgastzellenabschnittes 1a rückwärtig fortführendes Bodenteil 41 und Seitenteile 42a und 42b aufweist. Die Seitenteile 42a und 42b sind an die äußere Form der Seitentunnel 30a und 30b in y-Richtung stufenartig angepasst und sind jeweils in ein eine Radkasteninnenwand 43a und 43b bildendes Flächenelement übergehend ausgebildet.

Der Heckteilabschnitt 1 c umfasst ferner als weiteren Tragstruktur-Köper eine Stauraumzelle 50, welche einen im Wesentlichen in der x-y-Ebene verlaufenden Stauraumzellenboden 51 mit daran angeformten in z-Richtung sich erstreckenden Stauraumzellenseitenwänden 52a und 52b und einer angeformten frontseitigen Stirnwand 53 aufweist, wobei diese Stirnwand 53 mit dem Sitzlelinenflächenelement 29 im Wesentlichen in z-Richtung fluchtet, wie dies aus Figur 3 und 4 ersichtlich ist. Dabei gehen Randverstärkungen 29a und 29b des Sitzlehnenflächenelements 29 in entsprechende Randverstärkungen 52a und 52b über.

Zur Bildung einer Dachstruktur 60 der Karosserie-Tragstruktur 1 ist beidseitig jeweils ein den unteren A-Säulenabschnitt 22a und 22b bogenförmig mit der Stirnwand 53 der Stauraumzelle 50 verbindender Dachspant 61 a bzw. 61 b vorgesehen, so dass jeweils ein B-Säulenelement 62a, 62b den Dachspant 61a bzw. 61b mit dem Wannenseitenteil 13a des Wannenbodens 12a im Bereich des Fahrgastzellenabschnittes 1 a verbindet. Ferner ist ein Dachflächenelement 64 vorgesehen, welches zwischen zwei beabstandeten, die Dachspanten 61a und 61b in y-Richtung verbindenden Querelementen 63a und 63b aufgenommen wird.

Schließlich ist als letzter Tragstruktur-Körper ein jeweils ein den unteren A-Säulenabschnitt 22a bzw. 22b, den Dachspant 61a bzw. 61b, das B-Säulenelement 62a bzw. 62b und eine Stauraumzellenseitenwand 52a bzw. 52b der Stauraumzelle 50 außenseitig abdeckendes Seitenteilelement 70a bzw. 70b vorgesehen.

Zum Aufbau der Karosserie-Tragstruktur 1 (ohne Fahrzeugtüren) werden die einzelnen aus einem faserverstärktem Kunststoff hergestellten Tragstruktur-Körper über eine Klebeverbindung miteinander verbunden.

### Bezugszeichen

- 1: Karosserie-Tragstruktur
- 1a: Fahrgastzellenabschnitt
- 1b: Vorbauabschnitt
- 1c: Heckteilabschnitt

- 10: Tragstruktur-Körper, Bodengruppe
- 11: Unterboden der Bodengrupe 10
- 12: Wannenboden des Unterbodens 11
- 12a: Wannenboden im Bereich des Fahrgastzellenabschnittes 1 a
- 12b: Wannenboden im Bereich des Vorbauabschnittes 1 b
- 13: Wannenseitenteile des Unterbodens 11
- 13a: Wannenseitenteile des Fahrgastzellenabschnittes 1 a
- 13b: Wannenseitenteile im Bereich des Vorbauabschnittes 1b
- 13c: frontseitiges Wannenseitenteil des Vorbauabschnittes 1b
- 13d: rückwärtige Wannenseitenteil des Fahrgastzellenabschnittes 1a
- 14: Erhebung
- 15a: Durchbruch im Wannenseitenteil 13c
- 15b: Durchbruch im Wannenseitenteil 13c
- 16: Öffnungen in Wannenseitenteil 13b

- 20: Tragstruktur-Körper, Vorbauzelle
- 21a: Vorbauseitenteil der Vorbauzelle 20
- 21b: Vorbauseitenteil der Vorbauzelle 20
- 22a: unterer A-Säulenabschnitt des Vorbauseitenteils 21 a
- 22b: unterer A-Säulenabschnitt des Vorbauseitenteils 21 b
- 23: Stirnwand der Vorbauzelle 20
- 23a: Flächenelement der Vorbauzelle 20
- 23b: Durchbruch der Stirnwand 23
- 24a: Vorbauflächenelement der Vorbauzelle
- 24b: Vorbauflächenelement der Vorbauzelle
- 24c: Flächenelement der Vorbauzelle 20
- 24d: Flächenelement der Vorbauzelle 20
- 25: Radkasten
- 26: Begrenzungsrand des Vorbauflächenelementes 24a, 24b
- 27a: Aufnahmekammer der Vorbauzelle
- 27b: Aufnahmekammer der Vorbauzelle
- 28: Sitzflächenelement des Wannenseitenteils 13d
- 29: Sitzlehnenflächenelement
- 29a: Randverstärkung des Sitzflächenelements 29
- 29b: Randverstärkung des Sitzflächenelements 29

- 30a: Seitentunnel der Bodengruppe 10
- 30b: Seitentunnel der Bodengruppe 10

- 40: Tragstruktur-Körper, Unterboden-Heckteil
- 41: Bodenteil des Unterboden-Heckteils 40
- 42a: Seitenteil des Unterboden-Heckteils 40
- 42b: Seitenteil des Unterboden-Heckteils 40
- 43a: Radkasteninnenwand des Seitenteils 42a
- 43b: Radkasteninnenwand des Seitenteils 42b

- 50: Tragstruktur-Körper, Stauraumzelle
- 51: Stauraumzellenboden der Stauraumzelle 50
- 52a: Stauraumzellenseitenwand der Stauraumzelle 50
- 52b: Stauraumzellenseitenwand der Stauraumzelle 50
- 53: Stirnwand der Stauraumzelle 50
- 53a: Randverstärkung der Stirnwand 52
- 53b: Randverstärkung der Stirnwand 52

- 60: Dachstruktur
- 61a: Dachspant der Dachstruktur 60
- 61b: Dachspant der Dachstruktur 60
- 62a: B-Säulenelement der Dachstruktur 60
- 62b: B-Säulenelement der Dachstruktur 60
- 63a: Querelement der Dachstruktur 60
- 63b: Querelemente der Dachstruktur 60
- 64: Dachflächenelement

- 70a: Tragstruktur-Körper, Seitenteilelement
- 70b: Tragstruktur-Körper, Seitenteilelement

## Patentansprüche

1. Karosserie-Tragstruktur (1) für eine Fahrzeug-Karosserie mit einem Fahrgastzellenabschnitt (1a), einem Vorbauabschnitt (1b) und einem Heckteilabschnitt (1c), wobei
- zur Bildung der Karosserie-Tragstruktur (1) wenigstens ein Tragstruktur-Körper (10, 20, 40, 50, 70) als in alle Fahrzeugrichtungen (x-, y-, z-Richtung) sich erstreckende drei-dimensionale Flächenstruktur aus Flächenelementen ausgebildet ist,
- die in unterschiedlichen Fahrzeugrichtungen (x-, y-, z-Richtung) sich erstreckenden Flächenelemente unter Bildung von weichen Übergängen verbunden ist,
- die Flächenelemente mit in Abhängigkeit der auftretenden Lasteinträge strukturierten Querschnittsflächen ausgebildet sind, und
- Flächenelemente mit geringen Lasteinträgen oder nichttragenden Bereiche mit Durchbrüchen ausgebildet sind,
**dadurch gekennzeichnet, dass**
- als Tragstruktur-Körper eine Bodengruppe (10) mit einem gemeinsamen wannenförmigen Unterboden (11) für den Fahrgastzellenabschnitt (1a) und den Vorbauabschnitt (1b) mit einem Wannenboden (12) und mit demselben einstückig verbundenen Wannenseitenteilen (13, 13a, 13b, 13c, 13d) vorgesehen ist, wobei im Bereich des Vorbauabschnittes (1b) der Wannenboden (12b) gegenüber dem Bereich des Fahrgastzellenabschnittes (1a) mit geringerer Breite in Fahrzeugquerrichtung (y-Richtung) symmetrisch abgesetzt ist, und
- die Bodengruppe (10) mit die gesamte horizontale Kontur des Wannenbodens (12) umlaufenden, im Wesentlichen in Fahrzeughochrichtung (z-Richtung) sich erstreckenden Wannenseitenteilen (13, 13a, 13b, 13c, 13d) ausgebildet ist.

2. Karosserie-Tragstruktur (1) nach Anspruch 1,
**dadurch gekennzeichnet, dass** die in Fahrzeuglängsrichtung (x-Richtung) verlaufenden Wannenseitenteile (13a) des Fahrgastzellenabschnittes (1a) in Fahrzeughochrichtung (z-Richtung) in einer Schwellerhöhe der Fahrzeug-Karosserie ausgebildet sind.

3. Karosserie-Tragstruktur nach Anspruch 2,
**dadurch gekennzeichnet, dass** die Wannenseitenteile (13b) im Bereich des Vorbauabschnittes (1b) in Fahrzeughochrichtung (z-Richtung) gegenüber der Schwellerhöhe höher ausgebildet sind.

4. Karosserie-Tragstruktur (1) nach einem der Ansprüche 1 bis 3,
**dadurch gekennzeichnet, dass** der Unterboden (12) im Bereich des Übergangs des Fahrgastzellenabschnittes (1a) zum Vorbauabschnitt (1b) mit einem die Wannenseitenteile (13a) verbindenden Erhebung (14) mit einer Querschnittsfläche in Fahrzeugquerrichtung (y-Richtung) ausgebildet ist, welche größer ist als die Querschnittsfläche des Wannenbodens (12a) im Bereich des Fahrgastzellenabschnittes (1a).

5. Karosserie-Tragstruktur (1) nach einem der Ansprüche 1 bis 4,
**dadurch gekennzeichnet, dass** der Wannenboden (12b) im Bereich des Vorbauabschnittes (1b) gegenüber dem Wannenboden (12a) im Bereich des Fahrgastzellenabschnittes (1a) mit einem stumpfen Winkel von mindestens 135° ausgebildet ist.

6. Karosserie-Tragstruktur (1) nach einem der Ansprüche 1 bis 5,
**dadurch gekennzeichnet, dass** das frontseitige Wannenseitenteil (13c) in Fahrzeugquerrichtung (y-Richtung) wenigstens einen Durchbruch (15a, 15b) zur Kühlluftzufuhr aufweist.

7. Karosserie-Tragstruktur (1) nach einem der Ansprüche 1 bis 6,
**dadurch gekennzeichnet, dass** die in Fahrzeuglängsrichtung (x-Richtung) verlaufenden Wannenseitenteile (13b) im Bereich des Vorbauabschnittes (1b) Öffnungen (16) zur Aufnahme von Vorderachsen aufweisen.

8. Karosserie-Tragstruktur (1) nach einem der Ansprüche 1 bis 7,
**dadurch gekennzeichnet, dass**
- der Vorbauabschnitt (1b) als Tragstruktur-Körper eine Vorbauzelle (20) mit zwei jeweils in Fahrzeughochrichtung (z-Richtung) gerichteten Vorbauseitenteilen (21a, 21b) aufweist, die jeweils in Fahrzeuglängsrichtung (x-Richtung), ausgehend vom endseitigen Bereich des Fahrgastzellenabschnittes (1a) der Kontur der Wannenseitenteile (13) bis zum in Fahrzeugquerrichtung (y-Richtung) verlaufenden frontseitigen Wannenseitenteil (13c) verlaufend ausgebildet sind,
- die Vorbauseitenteile (21a, 21b) jeweils am frontseitigen Ende des Fahrgastzellenabschnittes (1 a) mit einem unteren A-Säulenabschnitt (22a, 22b) ausgebildet sind, und
- im Übergang des Fahrgastzellenabschnittes (1a) zum Vorbauabschnitt (1b) ein die Vorbauseitenteile (21a, 21b) verbindendes Flächenelement als Stirnwand (23) vorgesehen ist.

9. Karosserie-Tragstruktur (1) nach Anspruch 8,
**dadurch gekennzeichnet, dass** die beiden Vorbauseitenteile (21a, 21b) der Vorbauzelle (20) jeweils an ihrem oberseitigen Ende mit einem in Fahrzeuglängsrichtung (x-Richtung) und in Fahrzeugquerrichtung (y-Richtung) verlaufenden Vorbauflächenelement (24a, 24b) übergehend ausgebildet sind, derart, dass zur Bildung eines Radkastens (25) dessen außenseitiger Begrenzungsrand (26) mit dem Verlauf des Wannenseitenteils (13a) im Bereich des Fahrgastzellenabschnittes (1a) fluchtet.

10. Karosserie-Tragstruktur (1) nach Anspruch 9,
**dadurch gekennzeichnet, dass** die beiden Vorbauflächenelemente (24a, 24b) im Bereich des die Stirnwand (23) bildenden Flächenelementes ineinander übergehend ausgebildet sind.

11. Karosserie-Tragstruktur (1) nach Anspruch 9 oder 10,
**dadurch gekennzeichnet, dass** die Vorbauzelle (20) an ihrem frontseitigen Ende beidseitig jeweils mit einer offenen Aufnahmekammer (27a, 27b) vorgesehen ist, wobei die Vorbauseitenteile (21a, 21b) und die Vorbauflächenelemente (24a, 24b) jeweils eine Seitenwand der Aufnahmekammer (27a, 27b) bilden.

12. Karosserie-Tragstruktur (1) nach einem der Ansprüche 1 bis 11,
**dadurch gekennzeichnet, dass** zum Lagern einer Rücksitzbank an das in Fahrzeugquerrichtung (y-Richtung) verlaufende, rückwärtige Wannenseitenteil (13d) des Fahrgastzellenabschnittes (1 a) ein im Wesentlichen in waagerechter Richtung verlaufendes Sitzflächenelement (28) angeformt ist, welches mit einem im Wesentlichen in Fahrzeughochrichtung (z-Richtung) sich erstreckenden Sitzlehnenflächenelement (29) verbunden ist.

13. Karosserie-Tragstruktur (1) nach Anspruch 12,
**dadurch gekennzeichnet, dass** das Sitzflächenelement (28) und das Sitzlehnenflächenelement (29) zueinander eine Winkelstellung mit einem im Wesentlichen dem Winkel zwischen dem Sitzteil und der Rückenlehne der Rücksitzbank entsprechenden Winkel aufweisen.

14. Karosserie-Tragstruktur (1) nach einem der Ansprüche 1 bis 14;
**dadurch gekennzeichnet, dass** der Unterboden (11) der Bodengruppe (10) ausgehend von dem rückwärtigen Wannenseitenteil (13d) in rückwärtiger Richtung mittels außenseitig angeordneten Seitentunneln (30a, 30b) verlängert wird, derart dass die außenseitigen Tunnelwände der Seitentunnel (30a, 30b) mit dem jeweiligen Wannenseitenteil (13a) im Bereich des Fahrgastzellenabschnittes (1 a) fluchten.

15. Karosserie-Tragstruktur (1) nach Anspruch 14,
**dadurch gekennzeichnet, dass** der Seitentunnel (30a, 30b) mit einer im Wesentlichen mit dem Wannenboden (12a) fluchtenden unterseitigen Tunnelwand ausgebildet ist.

16. Karosserie-Tragstruktur (1) nach Anspruch 14 oder 15,
**dadurch gekennzeichnet, dass** der Seitentunnel (30a, 30b) mit einer im Wesentlichen mit dem Sitzflächenelement (28) des rückwärtigen Wannenseitenteils (13d) des Unterbodens (12a) fluchtenden oberseitigen Tunnelwand ausgebildet ist.

17. Karosserie-Tragstruktur (1) nach einem der Ansprüche 14 bis 16,
**dadurch gekennzeichnet, dass** die beiden Seitentunnel (30a, 30b) stirnseitig in der Ebene des rückwärtigen Wannenseitenteils (13d) endend ausgebildet sind.

18. Karosserie-Tragstruktur (1) nach einem der Ansprüche 14 bis 17,
**dadurch gekennzeichnet, dass** die beiden in Fahrzeughochrichtung (z-Richtung) fluchtenden innenseitigen Tunnelseitenwände der Seitentunnel (30a, 30b) das rückwärtige Wannenseitenteil (13d) gitterartig strukturierend ausgebildet sind.

19. Karosserie-Tragstruktur (1) nach einem der Ansprüche 14 bis 18,
**dadurch gekennzeichnet, dass** der Heckteilabschnitt (1c) ein Unterboden-Heckteil (40) als Tragstruktur-Körper umfasst, welches ein den Wannenboden (12a) im Bereich des Fahrgastzellenabschnittes (1a) rückwärtig fortführendes Bodenteil (41) und Seitenteile (42a, 42b) aufweist, welche an die äußere Form der Seitentunnel (30a, 30b) in Fahrzeugquerrichtung (y-Richtung) stufenartig angepasst sind.

20. Karosserie-Tragstruktur (1) nach Anspruch 19,
**dadurch gekennzeichnet, dass** die Seitenteile (42a, 42b) des Unterboden-Heckteils (40) jeweils in ein eine Radkasteninnenwand (43a, 43b) bildendes Flächenelement übergehend ausgebildet sind.

21. Karosserie-Tragstruktur (1) nach einem der Ansprüche 1 bis 20,
**dadurch gekennzeichnet, dass** der Heckteilabschnitt (1c) als weiteren Tragstruktur-Köper eine Stauraumzelle (50) umfasst, welche einen Stauraumzellenboden (51) mit daran angeformten Stauraumzellenseitenwänden (52a, 52b) und angeformter frontseitigen Stirnwand (53) aufweist.

22. Karosserie-Tragstruktur (1) nach Anspruch 21,
**dadurch gekennzeichnet, dass** die Stirnwand (53) der Stauraumzelle (50) mit dem Sitzlehnenflächenelement (29) fluchtet.

23. Karosserie-Tragstruktur (1) nach einem der Ansprüche 8 bis 22,
**dadurch gekennzeichnet, dass** zur Bildung einer Dachstruktur (60) jeweils ein den unteren A-Säulenabschnitt (22a, 22b) bogenförmig mit der Stirnwand (53) der Stauraumzelle (50) verbindender Dachspant (61a, 61b) vorgesehen ist, wobei jeweils ein B-Säulenelement (62a, 62b) den Dachspant (61a, 61b) mit dem Wannenseitenteil (13a) des Wannenbodens (12a) verbindet.

24. Karosserie-Tragstruktur (1) nach Anspruch 23,
**dadurch gekennzeichnet, dass** zwei beabstandete, die Dachspanten (61a, 61b) in Fahrzeugquerrichtung (y-Richtung) verbindende Querelemente (63a, 63b) vorgesehen sind, welche zwischen sich ein Dachflächenelement (64) aufnehmen.

25. Karosserie-Tragstruktur (1) nach einem der Ansprüche 1 oder 2,
**dadurch gekennzeichnet, dass** als Tragstruktur-Körper ein den unteren A-Säulenabschnitt (22a, 22b), den Dachspant (61a, 61 b), das B-Säulenelement (62a, 62b) und eine Stauraumzellenseitenwand (52a, 52b) der Stauraumzelle (50) außenseitig abdeckendes Seitenteilelement (70a, 70b) vorgesehen ist.

## Claims

1. Car body bearing structure (1) for a motor vehicle body with a passenger cell section (1a), and front structure section (1 b) and rear structure section (1 c) wherein
- to form the car body bearing structure (1) at least one bearing structure element (10, 20, 40, 50, 70) is designed as a surface structure of surface elements which extends in all vehicle directions (x, y and z direction),
- the surface elements extending in different vehicle directions (x, y, z directions) are connected to each other forming soft transitions,
- the surface elements are designed with cross-sectional areas that are structured as a function the occurring loading, and
- surface elements subject to low loading or non-bearing are designed with apertures,
**characterised in that**,
- provided as a bearing structure element is a base group (10) with common trough-shaped underbody (11) for a passenger cell section (1 a) and the front structure part section (1 b) with a trough base (12) and with trough side parts (13, 13a, 13b, 13c, 13d) connected thereto in one piece, wherein in the area of the front structure section (1 b) the trough base (12b) is symmetrically offset vis-à-vis the area of the passenger cell section (1a) with a smaller width in the transverse vehicle direction (y direction), and
- the base group (10) is designed with trough side parts (13, 13a, 13b, 13c, 13d) surrounding the entire horizontal contour of the trough base (12) and essentially extending in the vertical direction of the vehicle (z direction).

2. Car body bearing structure (1) according to claim 1
**characterised in that** the trough side parts (13a) of the passenger cell section (1a) which extend in the longitudinal direction of the vehicle (x direction), are in the vertical direction of the vehicle (z direction) provided at a sill height of the vehicle body.

3. Car body bearing structure according to claim 2
**characterised in that** in the area of the front structure section (1 b), in the vertical direction of the vehicle (z direction) the trough side parts (13b) are designed to be higher than the sill height.

4. Car body bearing structure (1) according to any one of claims 1 to 3
**characterised in that** in the area of the transition of the passenger cell section (1 a) to the front structure section (1 b) the underbody (12) is designed with an elevation (14), connecting the trough side sections (13a), with a cross-sectional area in the transverse direction of the vehicle (y direction) which is greater than the cross-sectional area of the trough base (12a) in the area of the passenger cell section (1 a).

5. Car body bearing structure (1) according to any one of claim 1 to 4
**characterised in that** in the area of the front structure section (1 b) the trough base (12b) is formed at an obtuse angle of at least 135° vis-à-vis the trough base (12a) in the area of the passenger cell section (1 a).

6. Car body bearing structure (1) according to any one of claims 1 to 5 **characterised in that** the frontal trough side section (13 c) in the transverse direction of the vehicle (y direction) has at least one aperture (15a, 16b) for the supply of cool air.

7. Car body bearing structure (1) according to any one of claims 1 to 6 **characterised in that** in the area of the front structure section (1 b) the trough side sections (13b) extending in the longitudinal direction of the vehicle (x direction) have openings (16) for receiving front axles.

8. Car body bearing structure (1) according to any one of claims 1 to 7, **characterised in that**
- as the bearing structure element, the front structure section (1 b) comprises a frontal cell (20) with two front structure side sections (21 a, 21b) each directed in the vertical direction of the vehicle (z direction), which each extend in the longitudinal direction (x direction), starting from the end area of the passenger cell section (1a) along the contour of the trough side sections (13) to the frontal trough side sections (13c) running in the transverse direction of the vehicle (y direction),
- the front structure side sections (21 a, 21 b) are each formed on the frontal end of the passenger cell section (1 a) with a lower A-column section (22a, 22b), and
- in the transition from the passenger cell section (1 a) to the front structure section (1 b) a surface element connecting the front structure side sections (21a, 21 b) is provided as an end wall (23).

9. Car body bearing structure (1) according to claim 8
**characterised in that** the two front structure side sections (21 a, 21 b) of the front cell (20) are designed at their upper end with a frontal surface element (24a, 24b) extending in the longitudinal direction of the vehicle (x direction) and in the transverse direction of the vehicle (y direction) in such a way that to form a wheel house (25) its outer defining edge (26) is flush with the course of the trough side section (13a) in the area of the passenger cell section (1 a).

10. Car body bearing structure (1) according to claim 9
**characterised in that** the two front structure surface elements (24a, 24b) merge into each other in the area of the surface element forming the end wall (23).

11. Car body bearing structure (1) according to claim 9 or 10,
**characterised in that** the front structure cell (20) is provided on both sides at its front end with an open receiving chamber (27a, 27b), wherein the front structure side sections (21 a, 21 b) and the front structure surface elements (24a, 24b) each form a side wall of the receiving chamber (27a, 27b).

12. Car body bearing structure (1) according to any one of claims 1 to 11, **characterised in that** to support a rear seat bench an essentially horizontal seating area element (28) is formed on the rear trough side section (13d) of the passenger cell section (1 a) in the transverse direction of the vehicle (y direction), which is connected to a backrest surface element (29) essentially extending in the vertical direction of the vehicle (z direction).

13. Car body bearing structure (1) according to claim 12
**characterised in that** the seat surface element (28) and the backrest surface element (29) together take up an angular position with an angle essentially corresponding to the angle between the seat and the back of the rear seat bench.

14. Car body bearing structure (1) according to any one of claims 1 to 14 **characterised in that** starting from the rear trough side section (13d) the underbody (11) of the base group (10) is extended in the rearward direction by means of externally arranged side tunnels (30a, 30b) in such a way that the outer tunnel walls of the side tunnels (30a, 30b) are flush with the corresponding trough side section (13a) in the area of the passenger cells section (1a).

15. Car body bearing structure (1) according to claim 14
**characterised in that** the side tunnel (30a, 30b) is designed with a underside tunnel wall essentially flush with the trough base (12a).

16. Car body bearing structure (1) according to claim 14 or 15 **characterised in that** the side tunnel (30a, 30b) is designed with an upperside tunnel wall essentially flush with the seat surface element (28) of the rear trough side section (13d) of the underbody (12a).

17. Car body bearing structure (1) according to any one of claims 14 to 16 **characterised in that** at the end wall the two side tunnels (30a, 30b) are designed to end at the rear trough side section (13d).

18. Car body bearing structure (1) according any one of claims 14 to 17 **characterised in that** the two inner tunnel side walls of the of side tunnel (30a, 30b) flush in the vertical direction of the vehicle (z direction) are designed to structure the rear trough side section (13d) in a grid-like manner.

19. Car body bearing structure (1) according to any one of claims 14 to 18 **characterised in that** the rear structure section (1c) comprises an underbody rear section (40) as a bearing element, which has a base section (41) continuing the trough base (12a) rearwards in the area of the passenger cell section (1a) and side sections (42a, 42b), which are matched to the outer shape of the side tunnel (30a, 30b) in a step-like manner in the transverse direction of the vehicle (y direction).

20. Car body bearing structure (1) according to claim 19
**characterised in that** the side sections (42a, 42b) of the underbody rear section (40) each merge into a surface element forming an wheel house inner wall (43a, 43b).

21. Car body bearing structure (1) according to any one of claims 1 to 20 **characterised in that** the rear structure section (1c) comprises as further bearing structure a storage space cell (50) which has a storage space cell base (51) with storage space cell walls (52a, 52b) formed thereon and a frontal end wall (53).

22. Car body bearing structure (1) according to claim 21
**characterised in that** the end wall (53) of the storage space cell (50) is flush with the seat back surface element (29).

23. Car body bearing structure (1) according to any one of claims 8 to 22 **characterised in that** to form a roof structure (60) a roof frame (61a, 61b) connecting the lower A column section (22a, 22b) convexly with the end wall (53) of the storage space cell (50) is provided, wherein in each case a B column element (62a, 62b) connects the roof frame (61 a, 61 b) with the trough side section (13a) of the trough base (12a).

24. Car body bearing structure (1) according to claim 23
**characterised in that** two spaced transverse elements (63a, 63b) connecting the roof frame (61 a, 61 b) in the transverse direction of the vehicle (y direction) are provided which support a roof surface element (64) between them.

25. Car body bearing structure (1) according to any one of claims 1 or 2 **characterised in that** as a bearing structure a lateral section element (70a, 70b) externally covering the lower A column section (22a, 22b), the roof frame (61 a, 61 b), the B column element (62a, 62b) and storage space cell side wall (52a, 52b) of the storage space cell (50) is provided.

## Revendications

1. Structure porteuse de carrosserie (1) pour une carrosserie de véhicule avec une partie formant l'habitacle (1a), une partie formant l'avant (1b) et une partie formant l'arrière (1c),
- pour former la structure porteuse de carrosserie (1), au moins un corps de structure porteuse (10, 20, 40, 50, 70) étant conçu comme une structure de surface tridimensionnelle qui s'étend dans toutes les directions (directions x, y, z) du véhicule et qui est composée d'éléments plans,
- les éléments plans qui s'étendent dans différentes directions (directions x, y, z) du véhicule étant assemblés en formant des transitions douces,
- les éléments plans étant conçus avec des surfaces de section transversale structurées en fonction des contraintes de charge qui apparaissent, et
- des éléments plans qui ont de petites contraintes de charge ou des zones non porteuses étant conçus avec des ouvertures,
**caractérisée en ce que**
- il est prévu comme corps de structure porteuse un ensemble de plancher (10) avec un dessous de caisse (11) commun, en forme de berceau, pour la partie habitacle (1a) et pour la partie avant (1b) avec un fond de berceau (12) et avec des parties latérales de berceau (13, 13a, 13b, 13c, 13d) reliées d'un seul tenant audit fond de berceau, le fond de berceau (12b) dans la zone de la partie avant (1b) étant abaissé symétriquement par rapport à la zone de la partie habitacle (1a) avec une plus petite largeur dans le sens transversal du véhicule (direction y), et
- l'ensemble de plancher (10) est conçu avec des parties latérales de berceau (13, 13a, 13b, 13c, 13d) qui font tout le tour du contour horizontal du fond de berceau (12) et qui s'étendent globalement dans le sens de la hauteur du véhicule (direction z).

2. Structure porteuse de carrosserie (1) selon la revendication 1, **caractérisée en ce que** les parties latérales de berceau (13a) de la partie habitacle (1a) qui s'étendent dans le sens de la longueur du véhicule (direction x) sont conçues dans le sens de la hauteur du véhicule (direction z) à la hauteur de longeron de la carrosserie de véhicule.

3. Structure porteuse de carrosserie selon la revendication 2, **caractérisée en ce que** les parties latérales de berceau (13b) dans la zone de la partie avant (1b) sont conçues dans le sens de la hauteur du véhicule (direction z) plus hautes par rapport à la hauteur de longeron.

4. Structure porteuse de carrosserie (1) selon l'une des revendications 1 à 3, **caractérisée en ce que** le dessous de caisse (12) dans la zone de la transition de la partie habitacle (1a) à la partie avant (1b) est conçu avec une bosse (14) reliant les parties latérales de berceau (13a) avec une surface de section transversale, dans le sens transversal du véhicule (direction y), qui est plus grande que la surface de section transversale du fond de berceau (12a) dans la zone de la partie habitacle (1a).

5. Structure porteuse de carrosserie (1) selon l'une des revendications 1 à 4, **caractérisée en ce que** le fond de berceau (12b) dans la zone de la partie avant (1b) est conçu par rapport au fond de berceau (12a) dans la zone de la partie habitacle (1a) avec un angle obtus d'au moins 135°.

6. Structure porteuse de carrosserie (1) selon l'une des revendications 1 à 5, **caractérisée en ce que** la partie latérale de berceau (13c) frontale dans le sens transversal du véhicule (direction y) comporte au moins une ouverture (15a, 15b) pour l'amenée d'air de refroidissement.

7. Structure porteuse de carrosserie (1) selon l'une des revendications 1 à 6, **caractérisée en ce que** les parties latérales de berceau (13b) s'étendant dans le sens de la longueur du véhicule (direction x) comportent, dans la zone de la partie avant (1b), des ouvertures (16) pour loger des essieux avant.

8. Structure porteuse de carrosserie (1) selon l'une des revendications 1 à 7, **caractérisée en ce que**
- la partie avant (1b) comporte comme corps de structure porteuse un avant-corps (20) avec deux parties latérales d'avant-corps (21a, 21b) qui sont orientées à chaque fois dans le sens de la hauteur du véhicule (direction z) et qui sont conçues de manière à s'étendre à chaque fois dans le sens de la longueur du véhicule (direction x), à partir de la zone d'extrémité de la partie habitacle (1a) du contour des parties latérales de berceau (13) jusqu'à la partie latérale de berceau (13c) frontale s'étendant dans le sens transversal du véhicule (direction y),
- les parties latérales d'avant-corps (21a, 21b) sont conçues à chaque fois à l'extrémité frontale de la partie habitacle (1a) avec une partie de montant avant (22a, 22b) inférieure, et
- dans la transition de la partie habitacle (1a) à la partie avant (1b), un élément plan reliant les parties latérales d'avant-corps (21a, 21b) est prévu comme paroi frontale (23).

9. Structure porteuse de carrosserie (1) selon la revendication 8, **caractérisée en ce que** les deux parties latérales d'avant-corps (21a, 21b) de l'avant-corps (20) sont conçues à chaque fois au niveau de leur extrémité supérieure avec un élément plan d'avant-corps (24a, 24b) qui s'étend dans le sens de la longueur du véhicule (direction x) et dans le sens transversal du véhicule (direction y) de telle sorte que, pour la formation d'un carter de roue (25), le bord limitant extérieur (26) de celui-ci est aligné sur la forme de la partie latérale de berceau (13a) dans la zone de la partie habitacle (1a).

10. Structure porteuse de carrosserie (1) selon la revendication 9, **caractérisée en ce que** les deux éléments plans d'avant-corps (24a, 24b) sont conçus dans la zone de l'élément plan formant la paroi frontale (23) de manière à se confondre l'un dans l'autre.

11. Structure porteuse de carrosserie (1) selon la revendication 9 ou 10, **caractérisée en ce que** l'avant-corps (20) est prévu, au niveau de son extrémité frontale, des deux côtés à chaque fois avec une chambre de logement ouverte (27a, 27b), les parties latérales d'avant-corps (21a, 21b) et les éléments plans d'avant-corps (24a, 24b) formant à chaque fois une paroi latérale de la chambre de logement (27a, 27b).

12. Structure porteuse de carrosserie (1) selon l'une des revendications 1 à 11, **caractérisée en ce que**, pour loger une banquette arrière, il est formé sur la partie latérale de berceau (13d) arrière, s'étendant dans le sens transversal du véhicule (direction y), de la partie habitacle (1a) un élément d'assise (28) qui s'étend globalement dans la direction horizontale et qui est relié à un élément plan de dossier (29) s'étendant globalement dans le sens de la hauteur du véhicule (direction z).

13. Structure porteuse de carrosserie (1) selon la revendication 12, **caractérisée en ce que** l'élément plan d'assise (28) et l'élément plan de dossier (29) présentent l'un par rapport à l'autre une position angulaire avec un angle correspondant globalement à l'angle entre l'assise et le dossier de la banquette arrière.

14. Structure porteuse de carrosserie (1) selon l'une des revendications 1 à 14, **caractérisée en ce que** le dessous de caisse (11) de l'ensemble de plancher (10) est prolongé à partir de la partie latérale de berceau (13d) arrière dans la direction arrière au moyen de tunnels latéraux (30a, 30b) agencés côté extérieur de telle sorte que les parois de tunnels côté extérieur des tunnels latéraux (30a, 30b) sont alignées avec la partie latérale de berceau (13a) respective dans la zone de la partie habitacle (1a).

15. Structure porteuse de carrosserie (1) selon la revendication 14, **caractérisée en ce que** le tunnel latéral (30a, 30b) est conçu avec une paroi de tunnel inférieure qui est globalement alignée avec le fond de berceau (12a).

16. Structure porteuse de carrosserie (1) selon la revendication 14 ou 15, **caractérisée en ce que** le tunnel latéral (30, 30b) est conçu avec une paroi de tunnel supérieure qui est globalement alignée avec l'élément plan d'assise (28) de la partie latérale de berceau (13d) arrière du dessous de caisse (12a).

17. Structure porteuse de carrosserie (1) selon l'une des revendications 14 à 16, **caractérisée en ce que** les deux tunnels latéraux (30a, 30b) sont conçus de manière à se terminer côté frontal dans le plan de la partie latérale de berceau arrière (13d).

18. Structure porteuse de carrosserie (1) selon l'une des revendications 14 à 17, **caractérisée en ce que** les deux parois latérales de tunnel intérieures, alignées dans le sens de la hauteur du véhicule (direction z), des tunnels latéraux (30a, 30b) sont conçues de manière à structurer à la manière d'une grille la partie latérale de berceau (13d) arrière.

19. Structure porteuse de carrosserie (1) selon l'une des revendications 14 à 18, **caractérisée en ce que** la partie arrière (1c) comprend un arrière de dessous de caisse (40) comme corps de structure porteuse qui comporte une partie de fond (41) qui poursuit en arrière le fond de berceau (12a) dans la zone de la partie habitacle (1a) et des parties latérales (42a, 42b) qui sont adaptées à la manière d'échelons à la forme extérieure des tunnels latéraux (30a, 30b) dans le sens transversal du véhicule (direction y).

20. Structure porteuse de carrosserie (1) selon la revendication 19, **caractérisée en ce que** les parties latérales (42a, 42b) de l'arrière de dessous de caisse (40) sont conçues à chaque fois de manière à se transformer en un élément plan formant une paroi intérieure de carter de roue (43a, 43b).

21. Structure porteuse de carrosserie (1) selon l'une des revendications 1 à 20, **caractérisée en ce que** la partie arrière (1c) comprend comme autre corps de structure porteuse un coffre (50) qui comporte un fond de coffre (51) avec des parois latérales de coffre (52a, 52b) formées dessus et avec une paroi frontale (53) formée dessus.

22. Structure porteuse de carrosserie (1) selon la revendication 21, **caractérisée en ce que** la paroi frontale (53) du coffre (50) est alignée avec l'élément plan de dossier (29).

23. Structure porteuse de carrosserie (1) selon l'une des revendications 8 à 22, **caractérisée en ce que**, pour former une structure de toit (60), il est prévu à chaque fois une membrure de toit (61a, 61b) reliant en arc la partie de montant avant (22a, 22b) inférieure à la paroi frontale (53) du coffre (50), un élément de montant central (62a, 62b) reliant à chaque fois la membrure de toit (61a, 61b) à la partie latérale de berceau (13a) du fond de berceau (12a).

24. Structure porteuse de carrosserie (1) selon la revendication 23, **caractérisée en ce qu'**il est prévu deux éléments transversaux (63a, 63b) distants l'un de l'autre qui relient les membrures de toit (61a, 61b) dans le sens transversal du véhicule (direction y) et qui reçoivent entre eux un élément plan de toit (64).

25. Structure porteuse de carrosserie (1) selon l'une des revendications 1 ou 2, **caractérisée en ce qu'**il est prévu comme corps de structure porteuse un élément partiel latéral (70a, 70b) couvrant côté extérieur la partie de montant avant (22a, 22b) inférieure, la membrure de toit (61a, 61b), l'élément de montant central (62a, 62b) et une paroi latérale de coffre (52a, 52b) du coffre (50).
